# EUROPEAN PATENT SPECIFICATION

(11) **EP 2 491 290 B1**
(45) Date of publication and mention of the grant of the patent: **02.10.2013**
(21) Application number: 10773883.3
(22) Date of filing: 19.10.2010
(51) Int. Cl.: F16L 9/00, F16L 9/21, F16L 11/02, F24F 13/02

(54) **VENTILATION DUCT**
LÜFTUNGSKANAL
CONDUIT DE VENTILATION

(30) Priority: 21.10.2009 SE 0901364
(43) Date of publication of application: 29.08.2012
(73) Proprietor: Malmö Air AB, 211 19 Malmö (SE)
(72) Inventor: WALLIN, Peter, S-394 77 Kalmar (SE); BERNHARDSSON, Göran, S-269 95 Båstad (SE)
(74) Representative: Jacobsson, Peter
(86) International application number: PCT/EP2010/065734
(87) International publication number: WO 2011/048105

(56) References cited:
- EP-A2- 0 027 276
- DE-U1-202007 006 952
- US-A- 3 818 948

## Description

### TECHNICAL FIELD

The present invention concerns a duct with a quadrangular cross section for transport of a fluid, preferably a gas, in which longitudinal bending lines are arranged in the corner areas of the duct, by means of which the duct can be compressed from an open state, preferably a self-supporting state, to a flat state in which it can be rolled up and the walls of the duct having hinge parts, stiffening parts and relatively soft parts.

### PRIOR ART

A duct of the type mentioned in the introduction is described in PCT application SE 2009/000281 (published as WO-A-2009/145698 on 03.12.2009). This duct is produced from a compressed fiber material with a smaller admixture of binder. The shape of the longitudinal bending lines of the duct, the joint parts of the duct sides, the stiffening parts and its relatively soft parts are such that the duct has a substantially square cross section in the unloaded state and is self-supporting over great lengths up to 2-3 m. The duct is also flexible to a limited degree owing to the presence of the relatively soft parts in the walls. Finally, in the flattened state it can be rolled up to facilitate transport and other handling.

The duct according to the PCT application is relatively shape-stable and cannot be pressed together in the height direction so that the duct's construction height can be reduced at least to a certain degree, as, for example, can be the case with a duct produced from sheet metal. If the duct according to the PCT application is exposed to such an attempt it will immediately crumple up and be destroyed.

Another drawback in the duct according to the PCT application is that fact that flow control requires dampers, pressure-reducing flaps or similar parts internally in the duct, which often create turbulence and therefore noise.

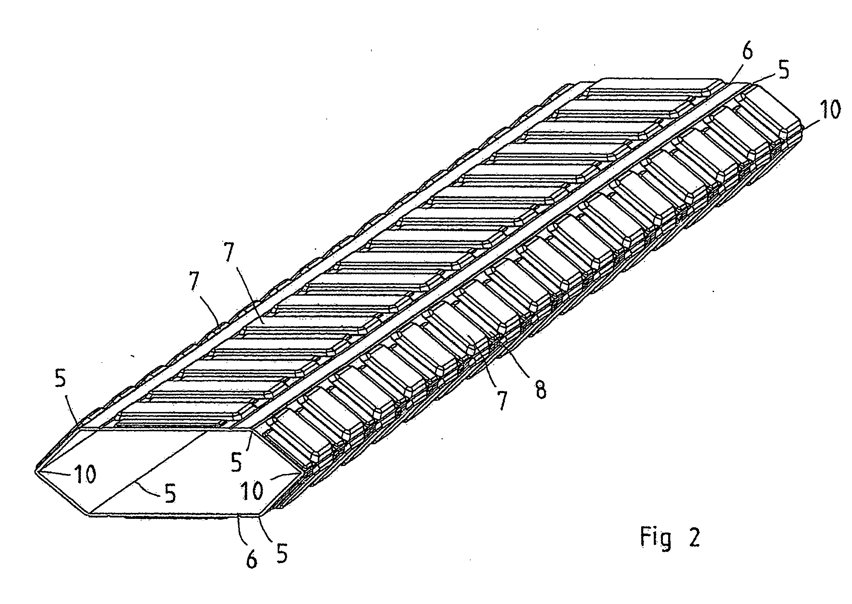

EP-A-0 027 276 discloses a transportable conduit section that is open or closed in the longitudinal direction. It is particularly intended to air conduits protected against fire in heating or air conditioning installations or in protection coating against fire of installation channels or lines for electric cable bundles. Each conduit section comprises at least one segment of flat material made of one or a plurality of cardboard layers of which one face at least is made of material shaped into fine grooves so as to give elastic bending characteristics allowing the unfolding of the flat material segment according to the spatial configuration of the conduit section or part of it. Figure 2C of the publication shows a duct section having a hexagonal cross-section.

### STATEMENT OF THE PROBLEM

The purpose of the present invention is to design the duct mentioned in the introduction so that it can acquire a varying construction height so that the construction height can be adjusted to the available space, for example, in a wall or a system of joists. Another objective of the invention is to design the duct so that it is fireproof, simple and cheap to manufacture and easy to install. The invention also seeks to design the duct so that flow control becomes possible without turbulence.

### SOLUTION TO THE PROBLEM

The objective underlying the invention is achieved by the features of claim 1. Particularly, the duct mentioned in the introduction is characterized by the fact that two opposite walls in their center areas each have at least one longitudinal folding line, by means of which folding lines the cross section of the duct can be adjusted from quadrangular to hexagonal.

The dependent claims provide further advantageous embodiments of the present invention.

### SUMMARY OF THE DRAWINGS

The invention will now be further described with reference to the accompanying drawings, depicting non-limiting embodiments. In the drawings:
- Figure 1: shows in perspective a section of a duct according to an embodiment of the invention, which is given a first hexagonal cross section;
- Figure 2: shows a view corresponding to Figure 1 of a section of a duct according to an embodiment of the invention, which is given a somewhat flatter cross section;
- Figure 3: shows a cross section through the duct according to an embodiment of the invention in the state according to Figure 1;
- Figure 4: shows a longitudinal section through the duct according to Figure 1;
- Figure 5: shows a section of the duct in the state according to Figure 1 with a first embodiment of a shape-holding element;
- Figure 6: shows a view corresponding to Figure 5 with a second embodiment of a shape-holding element;
- Figure 7: shows a view corresponding to Figures 5 and 6 with a third embodiment of a shape-holding element and
- Figure 8: shows a shape-holding element according to Figure 7.

### PREFERRED EMBODIMENT

The duct according to the invention is generally produced from a fiber material, like glass fiber, mineral wool or another type of fiber of the refractory type. A small amount of binder is mixed in this fiber material, whose function will be described further below.

On the inside the duct has a sealing layer impermeable to fluid, especially gas, which can be a plastic film of suitable quality. On the outside the duct can have an outer layer, which is particularly important in applications where condensation of atmospheric moisture can occur on the outside of the duct. However, such an outer layer is not always necessary, especially in those situations where condensation problems need not be feared.

The duct can be self-supporting over a relatively long section up to at least 2-3 m, for which reason the suspension points for a freely hanging duct can have the corresponding spacing. It is also flexible to a limited extent so that a continuous duct section can be used for joining to connections that are displaced or are not aligned with each other.

The duct according to the invention in a base state has a quadrangular, rectangular or square cross section, which is not shown in the drawing of the application.

The duct is preferably made starting from a web-like fiber material with a thickness in the order of 50-100 mm, preferably 80-90 mm. There can be a small admixture of binder in this fiber material. Production occurs so that the web-like fiber material is compressed to a significant degree so that the thinnest parts of the duct only acquire a thickness in the order of a few millimeters or less, whereas the thicker parts of the duct acquire a thickness in the order of 8-15 mm. Heat is supplied during compression of the web-like fiber material, which activates the binder.

In each of its corner areas the duct has at least one longitudinal bending line, which functions as a hinge having spring properties. The duct according to the invention can be compressed to a flat state and rolled up into a roll shape on this account.

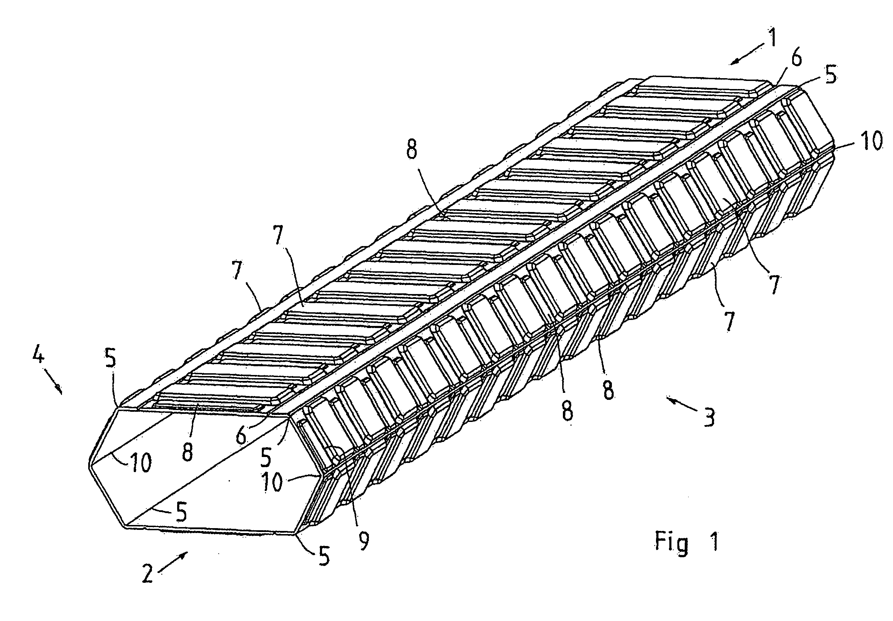

It follows from Figure 1 that the duct has an upper 1 and a lower 2 wall and two opposite side walls 3 and 4. Forming of all four walls is based on the same principle but with an important difference, which will be described in detail below.

As mentioned, walls 1-4 in their joining areas in the corners of the duct have bending lines 5 around which the wall material of the duct is flexible around axes parallel to the longitudinal direction of the duct. The bending lines could be several in number in each corner area and a second bending line 6 is shown in the drawings. The bending lines are formed from hard compressed fiber material with a thickness in the order of a few millimeters, possibly less. The bending lines have insignificant width in the order of 1-3 mm and are flexible and function as hinges so that the duct in the unloaded state acquires a self-supporting and open cross section. The duct therefore withstands both internal and external overpressure.

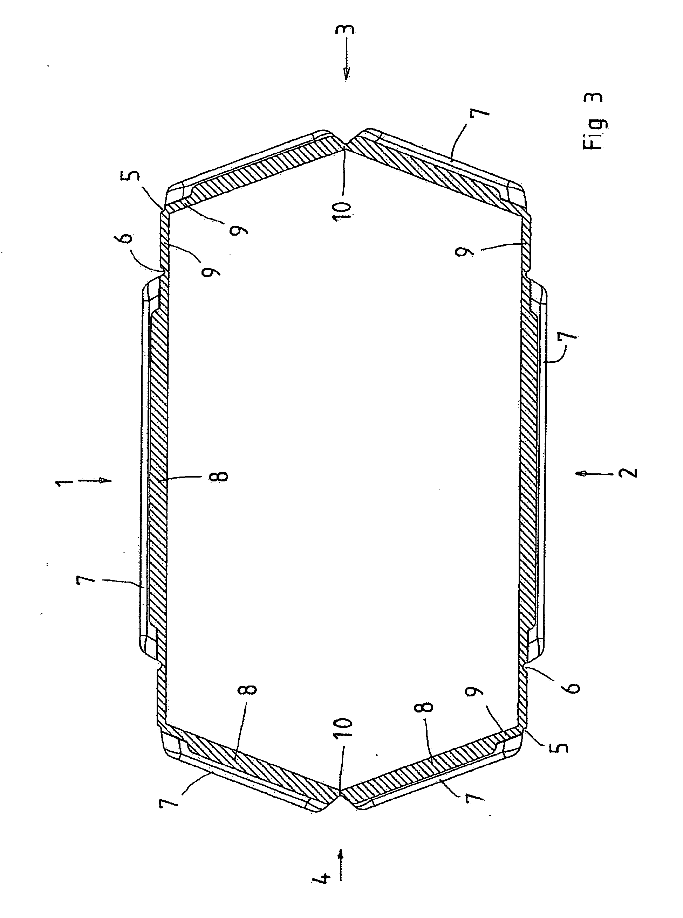

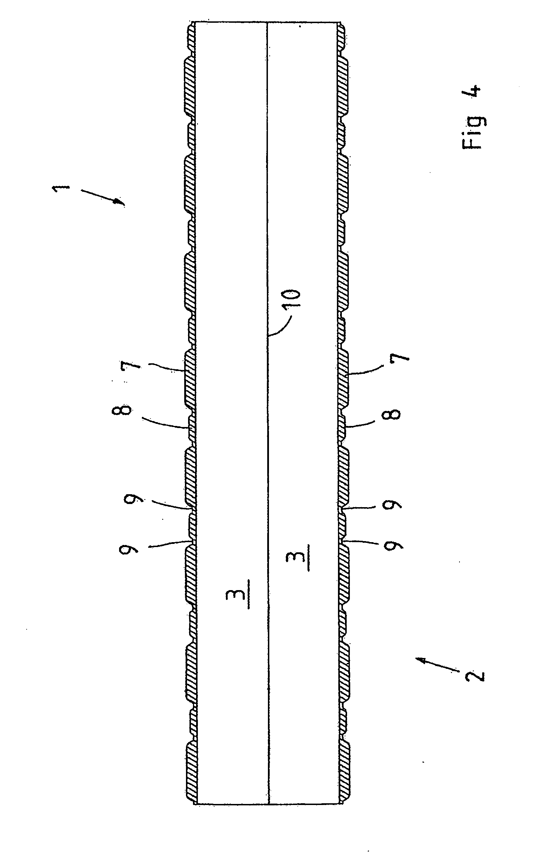

The walls 1-4 of the duct also have relatively soft parts 7, stiffening parts 8 and hinge parts 9 (see Figures 3 and 4). In the drawings the relatively soft parts 7, the stiffening parts 8 and the hinge parts 9 are shown arranged in sequence one after the other with joints parts 9 on opposite sides and a stiffening part 8 and two relatively soft parts 7 on opposite sides around the aforementioned hinge parts 9. The longitudinal direction for these parts is directed crosswise relative to the longitudinal axis of the duct. According to the drawings relatively soft parts 7 are wider than the stiffening parts 8 when the width is calculated in the longitudinal direction of the duct. In the same drawing the hinge parts 9 are narrower than the stiffening parts 8. Mostly the stiffening parts but also to a certain degree the hinge parts 9 have the task of keeping walls 1-4 flat.

As stated above, the duct is flexible to a limited extent, in which bending occurs in and around hinge parts 9 in the side walls at the same time as the relatively soft part 7 can both be stretched and compressed because of the lower density of the fibers and lesser coupling via the binder between adjacent fibers.

The duct described above is self-supporting and has an open quadrangular cross section. This means that it always requires the same space for incorporation.

According to the invention, two opposite side surfaces 3, 4 in the duct can each have at least one longitudinal folding line 10 by means of which folding lines the cross section of the duct can be converted from the quadrangular shape described above to a hexagonal shape. Such a hexagonal shape is shown in the drawing figures and it clearly follows that the duct with this cross-sectional shape has a much smaller installation dimension in one direction than in the other direction.

When a duct is converted from a quadrangular to hexagonal cross section its cross-sectional area is reduced. This entails a possibility for flow control. If such a change in cross-sectional shape is produced locally, the transition occurs gradually because of the inherent stiffness and spring properties of the duct. The risk of turbulence is therefore significantly reduced.

The folding lines 10 in the side walls of the duct are placed in its center areas i.e., at the same distance from the bending lines 5 in the corner parts of the duct. Folding lines 10 also extend through the relatively soft parts 7, the stiffening parts 8 and cross the hinge parts 9. This means that the relatively soft parts 7 and the stiffening parts 8 on the side walls 3 and 4 are interrupted in the center areas of the side walls in the height direction.

Figure 1 and 2 show ventilation ducts made according to the invention in which the height of the cross section of the duct is less in Figure 2 than in Figure 1. This was produced by compressing the duct cross section in Figure 2 in the height direction to a greater degree than in Figure 1. If the compressing forces in the height direction are released, the duct cross section, both in Figure 1 and Figure 2, will return to a quadrangular shape because of the spring properties in the bending lines 5 and the folding lines 10. To prevent the duct cross section from returning to the quadrangular shape the duct according to the invention may include a shape-holding element 11, which can be arranged both internally in the duct and externally around at least large parts of its peripheral area.

An internal shape-holding element is not shown in the drawings but is represented, for example, by a frame produced from sheet metal with a hexagonal shape. In this case the external dimension of the frame is only slightly less than the desired inside dimensions of the duct. Because of the spring properties in the duct this frame need only be fastened in the longitudinal direction of the duct.

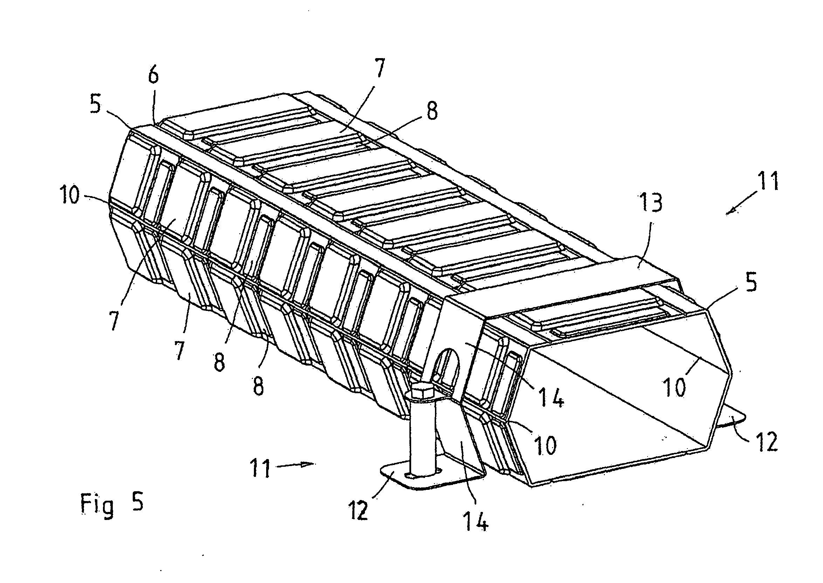

A first embodiment of an external shape-holding element 11 is shown in Figure 5 and it follows from the figure that it is also shaped like a bracket for a duct section and for this purpose has fastening flanges 12 through which screws can be tightened. The spacing in the longitudinal direction of the duct between such shape-holding elements 11 can be in the order of 2-3 m, which also applies to the internal shape-holding element.

Between fastening flanges 12 the shape-holding element 11 has the shape of a sheet metal strip or clamp, which at least for the most part encloses the duct section and defines its shape. Since the duct section is enclosed on all sides by the shape-holding element and a surface against which it is mounted, the cross-sectional shape cannot be influenced by internal overpressure, external overpressure or by the inherent spring effect in the bending lines 5 or folding lines 10. The stiffening parts 8 and joint parts 9 also help to keep the walls 1-4 flat between bending lines 5 and folding lines 10.

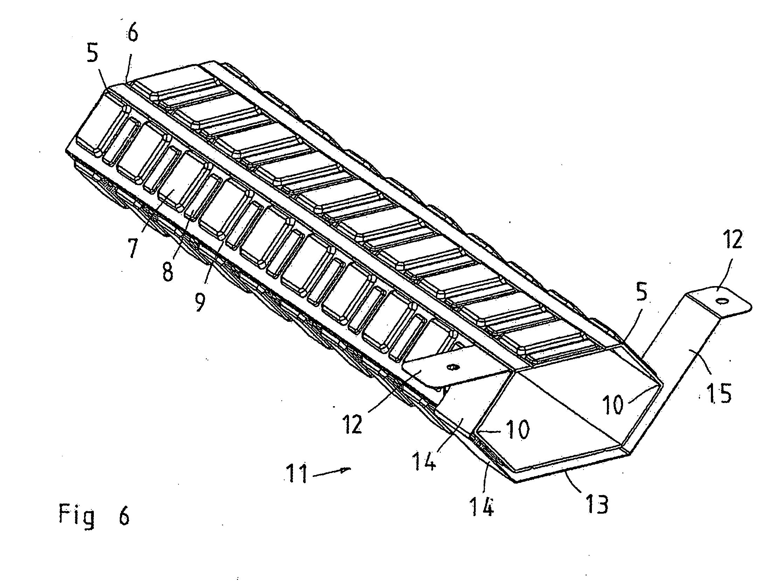

A somewhat modified embodiment of the shape-holding element 11 is shown in Figure 6 relative to that of Figure 5. In this embodiment, like the embodiment described above, there are fastening flanges 12 for mounting of a duct section but the duct section is not entirely enclosed on all sides by the shape-holding element 11 and the surface against which the duct section is mounted. It follows from Figure 6 that one half of one side surface is unsupported, which does not hamper the shape-defining effect from the structure, since the duct is constricted in the height direction against its spring effect.

In the embodiments according to Figures 5 and 6 the shape-holding element 11 has a longer branch 13, whose length corresponds to or slightly exceeds the external transverse dimension of the duct when it is situated in the state with a quadrangular cross section. The shape-holding element 11 in the embodiment according to Figure 5 also has shorter branches 14, only two of which are clearly shown in the figure. The combined length of the two shorter and adjacent branches 14 suitably agrees with the length in the longer branch 13.

In the embodiment according to Figure 6 there are two shorter branches 14 in the one side of shape-holding element 11 and a longer branch 13 in its lower side in the figure, whereas the remaining branches 15 have roughly the same length as the longer branch 13 but are unbent in the shown embodiment. Bending of this branch 15 in the area for the folding line 10 of the duct would result in an embodiment that essentially corresponds to the embodiment according to Figure 5.

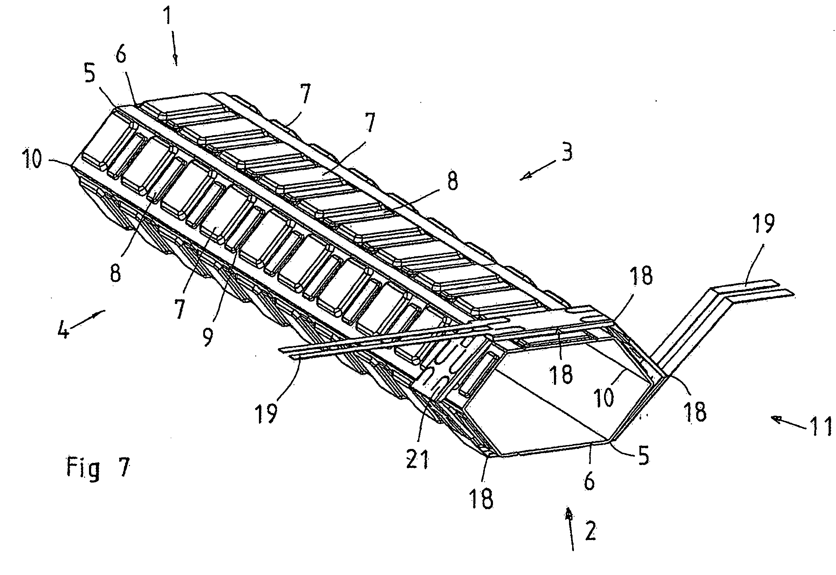

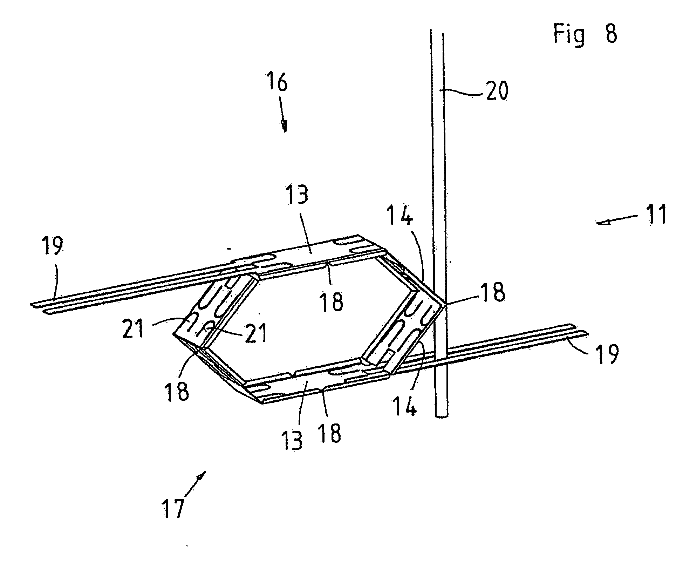

An embodiment of a shape-holding element 11 is also shown in Figures 7 and 8. This shape-holding element is divided in two and consists of two identically shaped components 16 and 17.

On comparison with Figure 8, the upper part 16 of the shape-holding element, in contrast to what is seen in the drawing, is made as a straight piece during production. The upper part 16 has a longer branch 13 and two shorter branches 14 that are therefore unbent during manufacture and extend aligned with each other. The upper part consists of a sheet metal strip, which along opposite side edges has transversely bent stiffening edges with a notch 18 made in them, that form bending notches. The spacing between the adjacent bending notches 18 agrees with half the external width on a duct wall 1-4 or exceeds it only slightly.

The lower part 17 of the shape-holding element 11 according to Figure 8 is made accordingly.

The two parts 16 and 17 of the shape-holding element 11 have a fastening device 19 on the free ends of the longer branches 13, that, as follows from the figure, can include two sheet metal belts positioned at a spacing from each other, which can serve for fastening of screws, threaded rods 20 or the like.

It was mentioned above that the duct according to the invention is flexible to a limited extent. To support such bending and make it permanent, the shape-holding element 11 in the area situated within the folding lines 10 of the duct has tabs 21, which are bendable to pinch into one of the areas of side walls 3 to 4 on opposite sides of the folding line 10. Such pinchings mean that the duct is bent in such a way that the pinchings are located on the radially inner, curved side surfaces of the duct.

Because the bending notches 18 are arranged at a mutual spacing that corresponds to half the width of a duct wall 1-4 the shape-holding element 11 can be bent differently than shown in Figure 8 and then becomes universally applicable, both for fastening of a duct section against an overlying surface (see Figure 7) and suspended, as shown in Figure 8, via the threaded rods or hangers 20. It can also be used for mounting of a duct with a quadrangular cross section.

To improve connection between the two parts 16 and 17 of the shape-holding element 11 in the embodiment according to Figure 8, each of the upper and lower parts 16 and 17 on their ends facing away from the fastening device 19 has a protruding sheet metal tab that fits into both branches at a spacing between fastening device 19.

The duct according to the invention has good heat-insulating properties. However, this can be further improved, if the wall thickness of the duct is increased, which also entails an increase in the outside dimension of the duct. However, this does not pose a problem with the two-part shape-holding element 11 according to Figures 7 and 8, since the two parts 16 and 17 can be displaced relative to each other.

In the above embodiments, particularly, the duct can be manufactured using a method as described in the in PCT application SE 2009/000281. Thus, stiffening parts 8 are preferably formed by pressing a fibre material, which is comprised in the duct walls to a high density with a small outer dimension in selected areas. The original material is preferably uniform in thickness and composition, but different areas will be compressed to a different extent. The stiffening parts (ribs or rigid areas) 8, which have been compressed to a high extent, are thus compact and has a high relative content by volume of fibres and binding agents, and a low relative content by volume of air. The stiffening parts 8 are thereby resistant to deformation.

The soft parts 7, on the other hand, have a higher relative content by volume of air and a lower relative content by volume of fibres and binding agents (compared to the stiffening parts 8), as they have been less compacted, although both the stiffening parts 8 and the soft parts 7 have preferably been produced from a material with a uniform and much bigger original thickness. The content of the binding agent must not be so high that the fibres in the soft parts 7 are completely fixed mutually into a rigid structure, but they are to a high extent free to move in relation to one another.

The stiffening means 8 are preferably integral with the material of the duct walls. This means that the stiffening means are constituted by the wall material itself, particularly the fibre material and the hinder therein. No separate stiffening means need to be inserted into the walls. The soft areas 7 are less compact, a fact which gives them several desirable properties. The soft areas 7 are less rigid than the stiffening parts 8, i.e. they are fairly easily deformable, taken by themselves.

A method of manufacturing the duct 1 can start from a fairly thick web or mat of fibre material, which has been manufactured in a way which is well known for a person skilled in the art. In the preferred embodiment the thickness of the web is approximately 50-100 mm, preferably 80-90 mm. If the web consists mainly of glass wool, a surface weight of 500-2000 g/m², and preferably 600-800 g/m².

Also, manufacturing can include pressing the rigid parts 8 so as to assume a thickness in the range of 6-10 mm, preferably approximately 8 mm in the preferred embodiment, for example into a thickness of approximately 1/10 of the original thickness of the material. The hinge parts 9 are even thinner that the rigid parts 8 and preferably have a thickness in the range of 1-4 mm, preferably approximately 2 mm in the preferred embodiment. This can mean that these hinge zones 9 have been pressed so as to assume a thickness of approximately 1/40 of the original thickness of the material (for example a thickness in the order of 1/30 to 1/50 of the original material thickness). Also, preferably, the fiber material in the folding lines 10 can be compressed to a thickness in the order of 1/30 to 1/50 (for example about 1/40) of the original material thickness of the fiber material from which the duct is produced. Finally, the soft parts 7 can be pressed to assume a thickness of about 12-16 mm, or about 1/7 to 1/5 of the original thickness.

Although the illustrative embodiments of the present invention have been described in greater detail with reference to the accompanying drawings, it will be understood that the invention is not limited to those embodiments. Various changes or modifications may be effected by one skilled in the art without departing from the scope of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

## Claims

1. Duct with quadrangular cross section for transport of a fluid, preferably a gas, in which longitudinal bending lines (5, 6) are arranged in the corner areas in the duct, by means of which the duct can be compressed from an open state to a flat state in which it can be rolled up, the walls (1-4) of the duct having hinge parts (9), stiffening parts (8) and relatively soft parts (7), the relatively soft parts (7) and the stiffening parts (8) being arranged in sequence one after the other with one hinge part (9) interposed between them, wherein a longitudinal direction for these parts (7, 8, 9) is directed crosswise relative to a longitudinal axis of the duct, wherein two opposite walls (3, 4) each have at least one longitudinal folding line (10) in their center areas by means of which folding lines the cross section of the duct can be converted from quadrangular to hexagonal.

2. Duct according to Claim 1, **characterized by** at least one external or internal shape-holding element (11), arranged to keep the duct in a hexagonal shape.

3. Duct according to any of Claims 1 or 2, **characterized by** the fact that the folding lines (10) extend through the stiffening parts (8) of walls (3, 4), their hinge parts (9) and their relatively soft parts (7).

4. Duct according to one of the Claims 2 or 3, **characterized by** the fact that an external shape-holding element (11) also is a fastening or suspension means to the duct.

5. Duct according to Claim 1 or 2, **characterized by** the fact that the walls (1-4) contain a fiber material compressed to different degrees in different parts of the walls.

6. Duct according to any of the Claims 1 to 5, **characterized by** the fact that the folding lines (10) consist of the material of walls (3, 4).

7. Duct according to any of the Claims 3 to 6, **characterized by** the fact that the folding lines (10) are elongated, narrow embossings in the fiber material from which the duct is made.

8. Duct according to any of the Claims 3 to 7, **characterized by** the fact that the fiber material in the folding lines (10) is compressed to a thickness in the order of 1/30 to 1/50 of the material thickness of the fiber material from which the duct is produced.

9. Duct according to any of the Claims 1 to 8, **characterized by** the fact that the folding lines (10) extend over the entire length of the duct.

10. Duct according to any of the Claims 1 to 9, **characterized by** the fact that internally it has a film-like layer of a fluid-impermeable material.

11. Duct according to any of the Claims 2 to 10, **characterized by** the fact that the shape-holding element (11) is in two parts and external, that each part (16, 17) has four sections (14), whose length corresponds to half the external width of the duct walls (1-4) and that bending notches (18) are arranged between adjacent sections.

12. Duct according to Claim 11, **characterized by** the fact that on at least one of the parts (16, 17) of the shape-holding element (11) in the bending notches (18) that are situated on a folding line (10) of the duct, tabs (21) are arranged, which can be pressed by bending into the wall (3, 4) of the duct on each side of the folding line (10).

13. Duct according to any of the preceding claims, wherein the duct can be compressed from an open self-supporting state to the flat state.

14. Duct according to any of the preceding claims, configured to change a duct's construction height by changing the cross-sectional shape of the duct.

15. Use of a duct according to any of the claims 1-14, wherein the duct's construction height is adjusted by changing the cross-sectional shape of the duct.

## Patentansprüche

1. Kanal mit viereckigem Querschnitt für den Transport eines Fluids, vorzugsweise eines Gases, in dem längslaufende gekrümmte Biegelinien (5, 6) in den Eckbereichen im Kanal angeordnet sind, durch die der Kanal von einem offenen Zustand in einen ebenen Zustand komprimiert werden kann, in dem er aufgerollt werden kann, wobei die Wände (1-4) des Kanals Scharnierteile (9), Versteifungsteile (8) und relativ weiche Teile (7) haben, wobei die relativ weichen Teile (7) und die Versteifungsteile (8) hintereinander eines nach dem anderen mit einem Scharnierteil (9) zwischen ihnen angeordnet sind, wobei eine Längsrichtung für diese Teile (7, 8, 9) quer zu einer Längsachse des Kanals ausgerichtet ist, wobei zwei gegenüberliegende Wände (3, 4) jeweils mindestens eine längslaufende Faltlinie (10) in ihren Mittelbereichen haben, wobei durch die Faltlinien der Querschnitt des Kanals von rechteckig in hexagonal umgewandelt werden kann.

2. Kanal nach Anspruch 1, **gekennzeichnet durch** mindestens ein externes oder internes formhaltendes Element (11), das zum Bewahren des Kanals in einer sechseckigen Form angeordnet ist.

3. Kanal nach Anspruch 1 oder 2, durch die Tatsache gekennzeichnet, dass sich die Faltlinien (10) durch die Versteifungsteile (8) der Wände (3, 4), ihre Scharnierteile (9) und ihre relativ weichen Teile (7) erstrecken.

4. Kanal nach Anspruch 2 oder 3, durch die Tatsache gekennzeichnet, dass ein externes formhaltendes Element (11) auch ein Befestigungs- oder Aufhängungsteil für den Kanal ist.

5. Kanal nach Anspruch 1 oder 2, **gekennzeichnet durch** die Tatsache, dass die Wände (1-4) ein Fasermaterial enthalten, das in unterschiedlichem Maße in verschiedenen Teilen der Wände komprimiert ist.

6. Kanal nach einem der Ansprüche 1 bis 5, **gekennzeichnet durch** die Tatsache, dass die Faltlinien (10) aus dem Material der Wände (3, 4) bestehen.

7. Kanal nach einem der Ansprüche 3 bis 6, **gekennzeichnet durch** die Tatsache, dass die Faltlinien (10) längsverlaufende schmale Prägungen im Fasermaterial sind, aus dem der Kanal hergestellt ist.

8. Kanal nach einem der Ansprüche 3 bis 7, **gekennzeichnet durch** die Tatsache, dass das Fasermaterial in den Faltlinien (10) bis zu einer Dicke in der Größenordnung von 1/30 bis 1/50 der Materialdicke des Fasermaterials komprimiert ist, aus dem der Kanal hergestellt ist.

9. Kanal nach einem der Ansprüche 1 bis 8, **gekennzeichnet durch** die Tatsache, dass die Faltlinien (10) sich über die ganze Länge des Kanals erstrecken.

10. Kanal nach einem der Ansprüche 1 bis 9, **gekennzeichnet durch** die Tatsache, dass er intern eine filmartige Schicht eines fluidundurchlässigen Materials hat.

11. Kanal nach einem der Ansprüche 2 bis 10, **gekennzeichnet durch** die Tatsache, dass das formhaltende Element (11) aus zwei Teilen extern besteht und dass jedes Teil (16, 17) vier Abschnitte (14) hat, deren Länge der halben äußeren Breite der Kanalwände (1-4) entspricht und dass Biegekerben (18) zwischen zwei benachbarten Abschnitten angeordnet sind.

12. Kanal nach Anspruch 11, **gekennzeichnet durch** die Tatsache, dass auf mindestens einem der Teile (16, 17) des formhaltenden Elementes (11) in den Biegekerben (18), die sich auf einer Faltlinie (10) des Kanals befinden, Laschen (21) angeordnet sind, die **durch** Biegen in die Wand (3, 4) des Kanals auf jeder Seite der Faltlinie (10) gedrückt werden können.

13. Kanal nach einem der vorherigen Ansprüche, wobei der Kanal aus einem offenen, selbsttragenden Zustand in den ebenen Zustand komprimiert werden kann.

14. Kanal nach einem der vorherigen Ansprüche, der zum Ändern der Konstruktionshöhe eines Kanals durch Ändern der Querschnittsform des Kanals ausgelegt ist.

15. Verwendung eines Kanals nach einem der Ansprüche 1-14, wobei die Konstruktionshöhe des Kanals durch Ändern der Querschnittsform des Kanals eingestellt wird.

## Revendications

1. Conduit de section transversale quadrangulaire pour le transport d'un fluide, de préférence d'un gaz, dans lequel des lignes de courbure longitudinales (5, 6) sont réalisées dans les zones de coin du conduit, au moyen desquelles lignes de courbure le conduit peut être comprimé d'un état ouvert dans un état aplati dans lequel il peut être enroulé, les parois (1-4) du conduit ayant des parties formant charnière (9), des parties de rigidification (8) et des parties relativement souples (7), les parties relativement souples (7) et les parties de rigidification (8) étant agencées en succession les unes après les autres avec une partie formant charnière (9) interposée entre elles, une direction longitudinale de ces parties (7, 8, 9) étant orientée transversalement par rapport à un axe longitudinal du conduit, deux parois opposées (3, 4) ayant chacune au moins une ligne de pliage longitudinale (10) dans leur région centrale, au moyen desquelles lignes de pliage la section transversale du conduit peut passer d'une forme quadrangulaire à hexagonale.

2. Conduit selon la revendication 1, **caractérisé par** au moins un élément externe ou interne de maintien de forme (11), prévu pour maintenir le conduit dans une forme hexagonale.

3. Conduit selon l'une quelconque des revendications 1 ou 2, **caractérisé en ce que** les lignes de pliage (10) s'étendent à travers les parties de rigidification (8) des parois (3, 4), leurs parties formant charnière (9) et leurs parties relativement souples (7).

4. Conduit selon l'une quelconque des revendications 2 ou 3, **caractérisé en ce qu'**un élément externe de maintien de forme (11) est également un moyen d'attache ou de suspension du conduit.

5. Conduit selon la revendication 1 ou 2, **caractérisé en ce que** les parois (1-4) contiennent un matériau fibreux comprimé à différents degrés dans différentes parties des parois.

6. Conduit selon l'une quelconque des revendications 1 à 5, **caractérisé en ce que** les lignes de pliage (10) sont constituées du matériau des parois (3, 4).

7. Conduit selon l'une quelconque des revendications 3 à 6, **caractérisé en ce que** les lignes de pliage (10) sont des bossages étroits allongés dans le matériau fibreux constituant le conduit.

8. Conduit selon l'une quelconque des revendications 3 à 7, **caractérisé en ce que** le matériau fibreux dans les lignes de pliage (10) est comprimé à une épaisseur de l'ordre de 1/30 à 1/50 de l'épaisseur de matériau du matériau fibreux constituant le conduit.

9. Conduit selon l'une quelconque des revendications 1 à 8, **caractérisé en ce que** les lignes de pliage (10) s'étendent sur toute la longueur du conduit.

10. Conduit selon l'une quelconque des revendications 1 à 9, **caractérisé en ce qu'**il présente à l'intérieur une couche de type film en matériau imperméable aux fluides.

11. Conduit selon l'une quelconque des revendications 2 à 10, **caractérisé en ce que** l'élément de maintien de forme (11) est en deux partie et externe, **en ce que** chaque partie (16, 17) présente quatre sections (14) dont les longueurs correspondent à la moitié de la largeur externe des parois (1-4) du conduit, et **en ce que** des encoches de courbure (18) sont prévues entre des sections adjacentes.

12. Conduit selon la revendication 11, **caractérisé en ce que** sur au moins l'une des parties (16, 17) de l'élément de maintien de forme (11) dans les encoches de courbure (18) qui sont situées sur une ligne de pliage (10) du conduit, sont disposées des languettes (21) qui peuvent être pressées en étant courbées dans la paroi (3, 4) du conduit de chaque côté de la ligne de pliage (10).

13. Conduit selon l'une quelconque des revendications précédentes, dans lequel le conduit peut être comprimé d'un état ouvert auto-supportant à l'état aplati.

14. Conduit selon l'une quelconque des revendications précédentes, configuré pour modifier la hauteur de construction d'un conduit en modifiant la forme en section transversale du conduit.

15. Utilisation d'un conduit selon l'une quelconque des revendications 1 à 14, la hauteur de construction du conduit étant ajustée en modifiant la forme en section transversale du conduit.
